# EUROPÄISCHE PATENTSCHRIFT

(11) **EP 0 623 981 B1**
(45) Veröffentlichungstag und Bekanntmachung des Hinweises auf die Patenterteilung: **17.09.1997**
(21) Anmeldenummer: 94250097.6
(22) Anmeldetag: 15.04.1994
(51) Int. Cl.: H02B 13/035

(54) **Gasisolierte Hochspannungsschaltanlage**
Gas-insulated high voltage switch installation
Appareillage de commutation à haute tension et à isolement gazeux

(30) Priorität: 30.04.1993 DE 4314821
(43) Veröffentlichungstag der Anmeldung: 09.11.1994
(73) Patentinhaber: SIEMENS AKTIENGESELLSCHAFT, 80333 München (DE)
(72) Erfinder: Lorenz, Dieter, Dipl.-Ing., D-12207 Berlin (DE); Meinherz, Manfred, Dipl.-Ing., D-13467 Berlin (DE)

(56) Entgegenhaltungen:
- EP-A- 0 229 220
- DE-U- 8 904 684
- FR-A- 2 459 565
- US-A- 4 032 820
- E & M; ELEKTROTECHNIK UND MASCHINENBAU, Bd.93, Nr.10, Oktober 1976, WIEN Seiten 421 - 423 HERBERT STIMMER 'Einführung in die SF6-Technik'
- BULL. DES SCHWEIZERISCHEN ELEKTROTEC VEREINS, Bd.62, Nr.14, 10. Juli 1971 Seiten 676 - 679 J. VONTOBEL 'Anwendung von Schwefelhexaflurid (SF6) im Schaltanlagenbau für Hoch- und Höchstspannungen'
- PATENT ABSTRACTS OF JAPAN vol. 13, no. 468 (E-84) 23. Oktober 1989 & JP-A-01 181 505 (TOSHIBA CORP.) 19. Juli 1989

## Beschreibung

Die Erfindung bezieht sich auf eine gasisolierte Hochspannungsschaltanlage mit einem einteiligen Kapselungsgehäuse, das wenigstens eine Öffnung und einen diese umgebenden Flansch aufweist, und mit einem an den Flansch angeflanschten, die Öffnung dicht abschließenden Gehäuseteil sowie mit einem in dem Kapselungsgehäuse angeordneten Ringkernstromwandler, welcher ein von Ringkernen umgebenes, an dem Gehäuseteil tragend befestigtes und mit diesem bewegbares Tragrohr aufweist

Eine derartige Hochspannungsschaltanlage ist beispielsweise aus der DE-PS 39 04 147 bekannt. Bei der dort dargestellten Schaltanlage ist ein Stromwandler innerhalb eines Kapselungsgehäuses mittels Befestigungslaschen fixiert, die an der Innenwand des Kapselungsgehäuses befestigt sind. Zur Befestigung des Stromwandlers in dem Kapselungsgehäuse ist ein guter Zugang im Bereich der Stromwandlerbefestigungen notwendig. Der Stromwandler versperrt in dem Kapselungsgehäuse den Zugang zu hinter dem Stromwandler liegenden weiteren Elementen.

Aus dem Fachartikel "Einführung in die SF₆-Technik", Elektrotechnik und Maschinenbau, Vol. 93, Nr. 10/1976, Seiten 421-423 ist eine gasisolierte Schaltanlage bekannt, bei der ein Ringkernstromwandler an einem Isolierstützer angeordnet ist.

Aus der EP-A-0 229 220 ist ein Ringkernstromwandler bekannt, der in einem zylindrischen Gehäuseteil befestigt ist, in welches auch eine Durchführung für Meßleitungen des Stromwandlers integriert ist.

Der Erfindung liegt die Aufgabe zugrunde, bei einer Hochspannungsschaltanlage der eingangs genannten Art den Stromwandler so anzuordnen und zu befestigen, daß sowohl eine leichte Montage des Stromwandlers, als auch ein leichter Zugang zu den übrigen Komponenten der Schaltanlage gewährleistet ist.

Die Aufgabe wird erfindungsgemäß dadurch gelöst, die Ringkerne innerhalb des Kapselungsgehäuses von ihrer Umfangsseite her frei zugänglich sind und daß in das Gehäuseteil eine Durchführung für die Meßleitungen des Stromwandlers integriert ist.

Das Gehäuseteil ist mittels einer Flanschverbindung mit dem Kapselungsgehäuse lösbar verbunden. Da der Stromwandler an dem lösbaren Gehäuseteil befestigt ist, läßt sich diese Befestigung fixieren, bevor das Gehäuseteil auf den Flansch des Kapselungsgehäuses aufgesetzt ist. Somit kann die Fixierung des Stromwandlers an dem Gehäuseteil außerhalb des Kapselungsgehäuses erfolgen, wodurch eine sehr gute Zugänglichkeit gewährleistet ist. Außerdem kann, um die hinter dem Stromwandler liegenden Komponenten innerhalb des Kapselungsgehäuses zugänglich zu machen, die Flanschverbindung zwischen dem Gehäuseteil und dem Kapselungsgehäuse gelöst und der Stromwandler mit dem Gehäuseteil wegbewegt werden. Die Ringkerne des Stromwandlers sind sowohl innerhalb als auch außerhalb des Kapselungsgehäuses zu Wartungszwecken frei zugänglich.

Als besonders vorteilhaft erweist es sich, daß die Öffnung so bemessen ist, daß der Stromwandler sie passieren kann.

In diesem Fall kann der Stromwandler nach dem Lösen der Flanschverbindung zwischen dem Gehäuseteil und dem Kapselungsgehäuse mit dem Gehäuseteil aus dem Kapselungsgehäuse herausgezogen und so ganz entfernt werden. Es steht somit der gesamte Querschnitt der Öffnung für Wartungsarbeiten an den übrigen Komponenten der Schaltanlage zur Verfügung. Insbesondere kann eine von der Öffnung aus gesehen hinter dem Stromwandler liegende Leistungsschalter-Unterbrechereinheit ebenfalls durch die Öffnung aus dem Kapselungsgehäuse herausgezogen werden. Bei der Montage kann zunächst die Unterbrechereinheit durch die Öffnung in das Kapselungsgehäuse eingeführt und dort fixiert werden, danach kann der Stromwandler, entweder nach oder vor seiner Befestigung an dem Gehäuseteil, durch die Öffnung in das Kapselungsgehäuse eingebracht werden.

Eine weitere vorteilhafte Ausgestaltung der Erfindung sieht vor, daß der Stromwandler tragend an dem Gehäuseteil befestigt ist.

Es ergibt sich somit nicht die Notwendigkeit einer weiteren Befestigung des Stromwandlers innerhalb des Kapselungsgehäuses. Der Stromwandler kann somit allein dadurch bewegt werden, daß das Gehäuseteil manipuliert wird. Zum Entfernen des Stromwandlers muß gegebenenfalls, falls es sich um einen Ringkernstromwandler handelt, der einen zentralen Leiter umgibt, vorübergehend ein Teil des Leiters entfernt werden.

Als vorteilhaft erweist sich außerdem, daß das Gehäuseteil ein Abdeckflansch ist.

Ein solcher Abdeckflansch bietet eine genügend große Oberfläche um eine stabile Befestigung des Stromwandlers zu gewährleisten. Dies ist insbesondere dann wichtig, wenn der Stromwandler eine größere Entfernung zu dem Gehäuseteil aufweist und demgemäß mittels eines langen Trägers an dem Gehäuseteil befestigt ist. In diesem Fall müssen große Drehmomente von dem Abdeckflansch aufgenommen werden.

Die Erfindung kann weiterhin vorteilhaft dadurch ausgestaltet werden, daß das Gehäuseteil ein Reduzierstück ist.

In diesem Fall kann beispielsweise ein durch das Reduzierstück durchgeführter Leiter derjenige sein, der von dem Stromwandler umgeben ist. Der Stromwandler kann auch in unmittelbarer Nähe des Reduzierstücks angeordnet sein, so daß das Reduzierstück keine besonders großen Drehmomente aufnehmen muß.
Eine weitere vorteilhafte Ausgestaltung der Erfindung sieht vor, daß der Stromwandler über mehrere Stäbe mit dem Gehäuseteil verbunden ist.

Hierdurch ergibt sich durch die Mehrpunktlagerung eine besonders gute Verteilung der durch das Gewicht des Stromwandlers auf das Gehäuseteil wirkenden Drehmomente.

Die Stäbe können auch an einer Platte befestigt sein, die zwischen dem Kapselungsgehäuse und dem an dieses angeflanschten Gehäuseteil durch das Anflanschen festgeklemmt wird.

Als besonders wenig aufwendig und kostengünstig erweist es sich, daß das Tragrohr einstückig mit dem Gehäuseteil verbunden ist.

Beispielsweise können das Gehäuseteil und das Tragrohr als einstückiges Gußteil hergestellt sein. Es ist aber auch möglich, das Tragrohr an dem Gehäuseteil durch Schweißen zu befestigen.

Eine weitere vorteilhafte Ausgestaltung der Erfindung sieht vor, daß das Tragrohr an seinem dem Gehäuseteil abgewandten Ende mit einer Abschirmelektrode lösbar verbunden ist.

Um eine genügende elektrische Festigkeit innerhalb des Kapselungsgehäuses zu erreichen, haben sich solche Abschirmelektroden bei Stromwandlern als nutzbringend erwiesen.

Zur Montage des Stromwandlers werden zunächst die Ringkerne auf das schon zu einer baulichen Einheit mit dem Gehäuseteil zusammengefaßte Tragrohr aufgeschoben und danach wird an dessen freiem Ende die Abschirmelektrode beispielsweise durch Anschrauben befestigt.

Außerdem kann vorteilhaft vorgesehen sein, daß in das Gehäuseteil eine Durchführung für die Meßleitungen des Stromwandlers integriert ist.

In diesem Fall müssen bei einer Demontage des Stromwandlers die Meßleitungen nicht abgetrennt werden. Die galvanische Verbindung zu den Sekundärleitungen des Stromwandlers und den von außen zugänglichen Meßanschlüssen bleibt daher erhalten. Dies ist insbesondere bei geeichten Wandlern vorteilhaft, bei denen eine Neuverlegung oder ein neues Zusammenstecken der Meßleitungen eine neuerliche Eichung notwendig machen würden.

Es ist auch die Montage der Meßleitungen vereinfacht, da diese vor dem Einbau des Stromwandlers und des Gehäuseteils in die Schaltanlage angeschlossen und verlegt werden können.

Im folgenden wird die Erfindung anhand eines Ausführungsbeispiels in einer Zeichnung gezeigt und anschließend beschrieben.

Dabei zeigt
Figur 1 einen Teil einer Hochspannungsschaltanlage in einem schematischen Längsschnitt mit einem Ringkernstromwandler, der an einem Abdeckflansch befestigt ist,
Figur 2 eine Schaltanlage in einem schematischen Längsschnitt, wobei ein Stromwandler an einem Reduzierflansch befestigt ist,
Figur 3 in einem schematischen Längsschnitt die bauliche Einheit aus Reduzierflansch und Stromwandler in detaillierterer Darstellung.

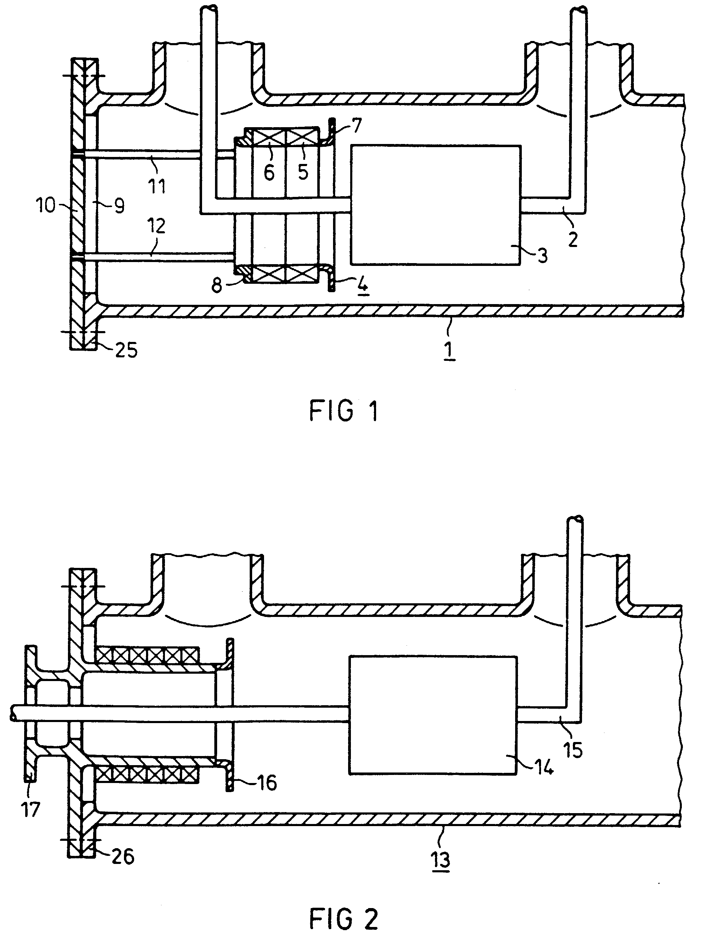

Figur 1 zeigt in einer schematischen Darstellung ein Kapselungsgehäuse 1 einer Hochspannungsschaltanlage, mit einem Hochspannung führenden Leiter 2, einer Unterbrechereinheit 3 eines Hochspannungs-Leistungsschalters sowie einem Stromwandler 4 der innerhalb des Kapselungsgehäuses 1 angeordnet ist. Der Stromwandler 4 ist als Ringkernstromwandler mit zwei Ringkernen 5, 6 und zwei Abschirmelektroden 7, 8 ausgebildet. Das Kapselungsgehäuse 1 weist unter anderem eine Öffnung 9 mit einem diese umgebenden Flansch 25 in der Verlängerung der Mittelachse des Stromwandlers 4 auf, die mittels eines Abdeckflansches 10 gasdicht verschlossen ist. An dem Abdeckflansch 10 sind vier Stangen 11, 12, befestigt, über die der Stromwandler 4 tragend mit dem Abdeckflansch 10 verbunden ist. Eine weitere Abstützung des Stromwandlers 4 gegen die Innenwände des Kapselungsgehäuses 1 ist damit nicht notwendig. Es könnte aber dennoch für Zwecke des Transports oder der Erdbebensicherheit eine zusätzliche radiale Abstützung des Stromwandlers 4 innerhalb des Kapselungsgehäuses 1 vorgesehen sein.

Das in Figur 2 dargestellte Kapselungsgehäuse 13 weist eine schematisch dargestellte Unterbrechereinheit 14 eines Leistungsschalters sowie einen das Kapselungsgehäuse durchsetzenden Hochspannungsleiter 15 und einen diesen umgebenden Ringkernstromwandler 16 auf. Der Ringkernstromwandler 16 ist tragend an dem Gehäuseteil 17 befestigt, das als Reduzierflansch ausgebildet ist. Der Hochspannungsleiter 15 durchsetzt das Reduzierstück 17 und führt, vom Kapselungsgehäuse 13 ausgehend durch das Reduzierstück 17 zu weiteren, nicht dargestellten Teilen der Hochspannungsschaltanlage.

Im Zuge des Hochspannungsleiters 15 ist eine Trennstelle vorgesehen, die es erlaubt, das Reduzierstück 17 von dem Flansch 26 des Kapselungsgehäuses 13 abzunehmen und damit auch den Ringkernstromwandler 16 aus dem Kapselungsgehäuse 13 zu entfernen.

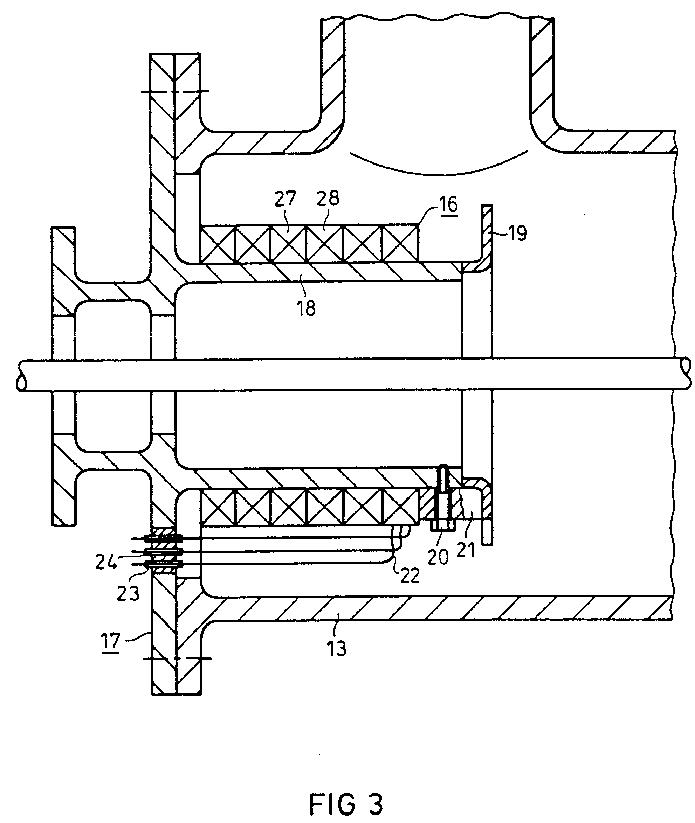

In Figur 3 ist detailliert dargestellt, daß das Reduzierstück 17 einstückig mit dem Tragrohr 18 des Ringkernstromwandlers verbunden ist. Diese bauliche Einheit ist als Gußteil, beispielsweise vorteilhaft aus Aluminiumguß, hergestellt. Sie kann aber auch als Schweißkonstruktion hergestellt sein. Auf dem Tragrohr 18 sind mehrere Kerne 27, 28 angeordnet und durch Vergießen fixiert. Nach dem Aufsetzen der Ringkerne 27, 28 auf das Tragrohr 18 wird an dem dem Reduzierstück 17 abgewandten Ende des Tragrohres 18 eine Abschirmelektrode 19 mittels Schrauben 20 befestigt. Zu diesem Zweck weist die Abschirmelektrode 19 angegossene Rippen 21 auf, die von den Schrauben 20 durchsetzt sind.

Von den Sekundärwicklungen des Ringkernstromwandlers 16 gehen Meßleitungen 22 aus, die mittels Durchführungen 23, 24 durch das Reduzierstück 17 zur Außenseite des Kapselungsgehäuses 13 durchgeführt sind. An der Außenseite sind gut zugängliche Anschlußbuchsen vorgesehen.

Hierdurch muß bei der Montage und Demontage des Ringkernstromwandlers 16 keine Meßleitung erneuert werden. Bei der Montage können die Meßleitungen vor dem Einschieben des Ringkernstromwandlers 16 in das Kapselungsgehäuse 13 verlegt werden.

## Patentansprüche

1. Gasisolierte Hochspannungsschaltanlage mit einem einteiligen Kapselungsgehäuse (1, 13), das wenigstens eine Öffnung (9, 26) und einen diese umgebenden Flansch (18, 25) aufweist, und mit einem an den Flansch (18, 25) angeflanschten, die Öffnung dicht abschließenden Gehäuseteil (10, 17) sowie mit einem in dem Kapselungsgehäuse (1, 13) angeordneten Ringkernstromwandler (4, 16), welcher ein von Ringkernen (27, 28) umgebenes, an dem Gehäuseteil (17) tragend befestigtes und mit diesem bewegbares Tragrohr (18) aufweist,
**dadurch gekennzeichnet**, daß
die Ringkerne (27, 28) innerhalb des Kapselungsgehäuses (1, 13) von ihrer Umfangsseite her frei zugänglich sind und daß in das Gehäuseteil (17) eine Durchführung für die Meßleitungen (22) des Stromwandlers (16) integriert ist.

2. Hochspannungsschaltanlage nach Anspruch 1,
**dadurch gekennzeichnet**, daß
die Öffnung (9, 26) so bemessen ist, daß der Stromwandler (4, 16) sie passieren kann.

3. Hochspannungsschaltanlage nach Anspruch 1 oder einem der folgenden,
**dadurch gekennzeichnet**, daß
das Gehäuseteil (10) ein Abdeckflansch ist.

4. Hochspannungsschaltanlage nach Anspruch 1 oder 2,
**dadurch gekennzeichnet**, daß
das Gehäuseteil (17) ein Reduzierstück ist.

5. Hochspannungsschaltanlage nach Anspruch 1 oder einem der folgenden,
**dadurch gekennzeichnet**, daß
der Stromwandler (4) über mehrere Stäbe (11, 12) mit dem Gehäuseteil (10) verbunden ist.

6. Hochspannungsschaltanlage nach Anspruch 1 oder einem der folgenden,
**dadurch gekennzeichnet**, daß
das Tragrohr (18) einstückig mit dem Gehäuseteil (17) verbunden ist.

7. Hochspannungsschaltanlage nach Anspruch 1 oder einem der folgenden,
**dadurch gekennzeichnet**, daß
das Tragrohr (18) an seinem dem Gehäuseteil (17) abgewandten Ende mit einer Abschirmelektrode (19) lösbar verbunden ist.

## Claims

1. Gas-insulated high-voltage switchgear having a one-part encapsulating housing (1, 13), which has at least one opening (9, 26) and a flange (18, 25) surrounding said opening, and having a housing portion (10, 17), which is flange-connected to the flange (18, 25) and seals the opening tightly, and also having a toroidal-core current transformer (4, 16) which is arranged in the encapsulating housing (1, 13) and has a support tube (18) which is surrounded by toroidal cores (27, 28), is fastened in a load-bearing manner to the housing portion (17) and is movable therewith, characterised in that the toroidal cores (27, 28) inside the encapsulating housing (1, 13) are freely accessible from their circumferential side, and in that a lead-through for the instrument leads (22) of the current transformer (16) is integrated into the housing portion (17).

2. High-voltage switchgear according to claim 1, characterised in that the opening (9, 26) is dimensioned in such a way that the current transformer (4, 16) can pass through it.

3. High-voltage switchgear according to claim 1 or one of the following claims, characterised in that the housing portion (10) is a covering flange.

4. High-voltage switchgear according to claim 1 or 2, characterised in that the housing portion (17) is a reducer.

5. High-voltage switchgear according to claim 1 or one of the following claims, characterised in that the current transformer (4) is connected to the housing portion (10) by way of a plurality of bars (11, 12).

6. High-voltage switchgear according to claim 1 or one of the following claims, characterised in that the support tube (18) is connected in one piece to the housing portion (17).

7. High-voltage switchgear according to claim 1 or one of the following claims, characterised in that the end of the support tube (18) that faces away from the housing portion (17) is detachably connected to a screening electrode (19).

## Revendications

1. Appareillage de commutation à haute tension et à isolement gazeux, comprenant un boîtier monobloc d'encapsulage (1, 13) muni d'au moins un orifice (9) et d'une bride (25, 26) entourant ce dernier ; une partie de boîtier (10, 17) bridée sur ladite bride (25, 26) et obturant l'orifice de manière étanche ; ainsi qu'un convertisseur de courant (4, 16) à noyaux toroïdaux, logé dans le boîtier d'encapsulage (1, 13) et présentant un tube de support (18) qui est entouré par des noyaux toroïdaux (27, 28) et est fixé, avec effet de support, à la partie (17) du boîtier avec laquelle il est mobile,
caractérisé par le fait que
les noyaux toroïdaux (27, 28) sont librement accessibles à l'intérieur du boîtier d'encapsulage (1, 13), à partir de son côté périphérique ; et par le fait qu'une traversée des conducteurs de mesure (22) du convertisseur de courant (16) est intégrée dans la partie (17) du boîtier.

2. Appareillage de commutation à haute tension selon la revendication 1,
caractérisé par le fait que
l'orifice (9) a des dimensions telles que le convertisseur de courant (4, 16) puisse y passer.

3. Appareillage de commutation à haute tension selon la revendication 1 ou l'une des suivantes,
caractérisé par le fait que
la partie (10) du boîtier est une aile de recouvrement.

4. Appareillage de commutation à haute tension selon la revendication 1 ou 2,
caractérisé par le fait que
la partie (17) du boîtier est une pièce de réduction.

5. Appareillage de commutation à haute tension selon la revendication 1 ou l'une des suivantes,
caractérisé par le fait que
le convertisseur de courant (4) est relié à la partie (10) du boîtier par l'intermédiaire de plusieurs tiges (11, 12).

6. Appareillage de commutation à haute tension selon la revendication 1 ou l'une des suivantes,
caractérisé par le fait que
le tube de support (18) est relié d'un seul tenant à la partie (17) du boîtier.

7. Appareillage de commutation à haute tension selon la revendication 1 ou l'une des suivantes,
caractérisé par le fait que
le tube de support (18) est relié à une électrode de blindage (19), de manière libérable, par son extrémité tournée à l'opposé de la partie (17) du boîtier.
